# EUROPÄISCHE PATENTSCHRIFT

(11) **EP 1 013 487 B1**
(45) Veröffentlichungstag und Bekanntmachung des Hinweises auf die Patenterteilung: **07.07.2004**
(21) Anmeldenummer: 99123165.5
(22) Anmeldetag: 22.11.1999
(51) Int. Cl.: B60H 1/00, B60H 1/04

(54) **Heizungsanlage für den Innenraum eines Fahrzeuges**
Heating system for the passenger compartment of a vehicle
Système de chauffage pour l'habitacle d'un véhicule automobile

(30) Priorität: 10.12.1998 DE 19857078
(43) Veröffentlichungstag der Anmeldung: 28.06.2000
(73) Patentinhaber: Volkswagen Aktiengesellschaft, 38436 Wolfsburg (DE)
(72) Erfinder: Grubel, Hartmut, 38108 Braunschweig (DE); Drees, Thomas, 38100 Braunschweig (DE)

(56) Entgegenhaltungen:
- EP-A- 0 507 120
- DE-A- 3 151 263
- DE-A- 3 526 518
- US-A- 2 488 278
- US-A- 3 084 866
- US-A- 3 948 312

## Beschreibung

Die Erfindung betrifft eine Heizungsanlage für den Innenraum eines Fahrzeuges mit den im Oberbegriff des Anspruchs 1 genannten Merkmalen.

Heizungsanlagen der gattungsgemäßen Art sind bekannt. Hierbei ist eine flüssigkeitsgekühlte Brennkraftmaschine in einen Kühlkreislauf eingebunden, innerhalb dem ein Kühlmittel, in der Regel Wasser, zirkuliert. Das Kühlmittel wird hierbei über einen Kühler geführt, so daß eine Kühlung der Brennkraftmaschine erfolgen kann. Es ist bekannt, zur Heizung des Innenraumes des Fahrzeuges von dem Kühlkreislauf einen Heizkreislauf abzuzweigen, der über eine Heizeinrichtung, insbesondere einen Wärmetauscher, geführt wird. Mittels des Wärmetauschers kann eine Heizluft erwärmt werden, die durch eine Strömungsmaschine über ein Kanalsystem in den Fahrzeuginnenraum führbar ist. Entsprechend einer Heizleistungsanforderung durch einen Fahrzeugführer oder eine automatische Temperaturregelung erfolgt eine unterschiedlich starke Erwärmung des Luftstromes durch den Wärmetauscher. Hierzu ist bekannt, einen mehr oder weniger großen Anteil des Luftstromes über den Wärmetauscher zu leiten. Zur Abzweigung des zu erwärmenden Luftstromes ist eine Temperaturmischklappe vorgesehen. Diese ist in Abhängigkeit der Heizleistungsanforderung mit einem Stellglied in ihrem Öffnungsgrad, der einen Strömungsquerschnitt zum Wärmetauscher freigibt, variierbar ist.

Bei den bekannten Heizungsanlagen ist nachteilig, daß bei einem Betriebszustand der Heizungsanlage, in dem keine Heizleistungsanforderung besteht, zwar die Temperaturmischklappe geschlossen ist, jedoch über den Wärmetauscher indirekt eine Wärmeenergie in den Luftstrom abgestrahlt wird. Somit erfolgt eine ungewollte Erwärmung des Luftstromes, die einerseits zu einer Komforteinbuße für Fahrzeuginsassen führt und andererseits zu einer unnötigen Wärmebelastung von weiteren Aggregaten, beispielsweise einem Klimatisierungsgerät, in der Nähe des Kanalsystems angeordneter Bedien- und Anzeigeeinrichtungen, Audiogeräte oder dergleichen, führt.

Um diesen Nachteil zu beheben, ist bekannt, in einem Vorlauf des Heizkreislaufes ein Regelventil anzuordnen, das bei nicht vorliegender Heizleistungsanforderung den Heizkreislauf schließt, so dass eine zusätzliche Wärmebelastung minimiert werden kann. Jedoch ist nachteilig, dass zur Ansteuerung des Vorlaufregelventils eine relativ aufwendige Temperaturmeß- und Ansteuerschaltung vorzusehen ist.

Die EP 0 507 120 A2 offenbart eine gattungsgemäße Klimaanlage für ein Kraftfahrzeug. Die Klimaanlage hat hinter einem Verdampfer einen Heizkanal mit einem wasserbetriebenen Wärmetauscher. Mittels einer Mischluftklappe und einer Luftleitklappe kann die vom Verdampfer kommende Luft zu einem beliebigen Anteil über den Wärmetauscher oder an ihm vorbei zu einem Luftauslaß geleitet werden. Die Mischluftklappe ist dabei mit einem Wasserabsperrventil im Wasseranschluss des Wärmetauschers gekoppelt, so dass bei nicht luftdurchströmtem Heizkanal der Wärmetauscher kalt bleibt. Das Wasserabsperrventil ist dabei mechanisch mit der Mischluftklappe gekoppelt, so dass es bei einem Verschwenken der Mischluftklappe zwangsläufig, d.h. zeitsynchron zu einer Betätigung des Wasserabsperrventils kommt.

Der Erfindung liegt die Aufgabe zugrunde, eine Heizungsanlage der gattungsgemäßen Art zu schaffen, bei der in einfacher Weise eine Minimierung einer Wärmebelastung von Komponenten bei nicht vorliegender Heizleistungsanforderung möglich ist.

Erfindungsgemäß wird diese Aufgabe durch eine Heizungsanlage mit den im Anspruch 1 genannten Merkmalen gelöst. Dadurch, daß ein Stellantrieb für die Temperaturmischklappe zusätzlich ein Vorlaufregelventil des Heizkreislaufes betätigt, ist in einfacher Weise möglich, bei ausbleibender Heizleistungsanforderung über den Stellantrieb zum einen die Temperaturmischklappe zu schließen und zum anderen den Vorlauf des Heizkreislaufes zu schließen. Hierdurch wird verhindert, daß ein eine bestimmte Solltemperatur aufweisendes Kühlmittel über den Heizkreislauf durch das Heizgerät strömt und somit dieses und den durch den Strömungskanal geführten Luftstrom ungewollt erwärmt. Durch die gemeinsame Betätigung der Temperaturmischklappe und des Vorlaufregelventils durch einen Stellantrieb ist ein Bauaufwand minimiert. Zusätzliche Sensoren, Steuerschaltungen und Stellmittel für das Rücklaufventil sind nicht notwendig, da dieses durch den Stellantrieb der Temperaturmischklappe angesteuert wird.

Dabei ist vorgesehen, daß das Vorlaufregelventil erst betätigt wird, nachdem die Temperaturmischklappe vollständig geschlossen ist. Hierdurch wird vorteilhaft erreicht, daß ein Schließen des Vorlaufes des Heizkreislaufes unabhängig von der Heizleistungsanforderung erfolgt. Der Vorlauf des Heizkraftlaufes wird erst geschlossen, nachdem die Temperaturmischklappe tatsächlich geschlossen ist. Insbesondere ist bevorzugt, wenn der Stellantrieb ein Schrittmotor ist, der nach Schließen der Temperaturmischklappe über zumindest eine weitere Schaltstellung hinaus betätigbar ist. Hierdurch kann mittels dieser wenigstens einen weiteren Schaltstellung nach Schließen der Temperaturmischklappe ein Schließen des Vorlaufregelventils des Heizkreislaufes durchgeführt werden.

In weiterer bevorzugter Ausgestaltung der Erfindung ist vorgesehen, daß der Stellantrieb mit dem Vorlaufregelventil über ein Schaltmittel, insbesondere ein Bowdenzug, mechanisch gekoppelt ist. Hierdurch läßt sich in einfacher Weise über den Stellantrieb eine Schließkraft auf das Vorlaufregelventil übertragen, wobei die mechanische Kopplung einfach und wartungsfrei realisierbar ist. Insbesondere bei einem bestimmungsgemäßen Einsatz in einem Fahrzeug ist diese mechanische Kopplung den auftretenden Belastungen, beispielsweise Rüttelbelastungen, thermischen Belastungen oder dergleichen gegenüber widerstandsfähig.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnung, die schematisch ein Blockschaltbild einer Heizungsanlage zeigt, näher erläutert.

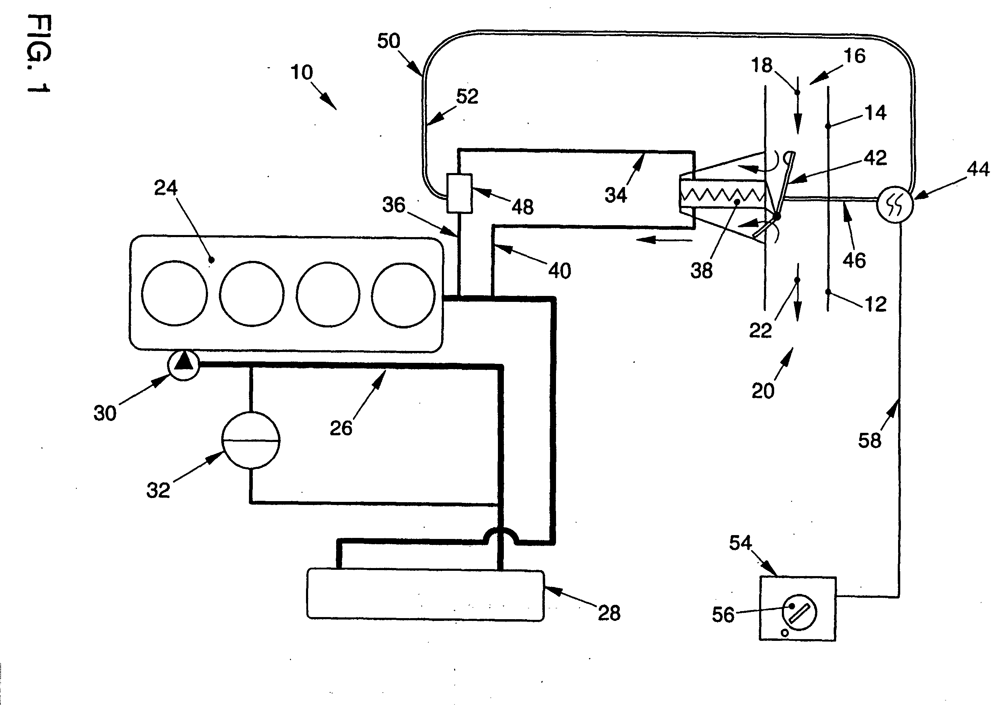

Die Figur zeigt ein Blockschaltbild einer insgesamt mit 10 bezeichneten Heizungsanlage eines Fahrzeuges. Die Heizungsanlage 10 umfaßt ein Heizgerät 12, durch das ein Kanalsystem 14 zum Transport von Luft führt. Das Kanalsystem 14 besitzt an seinem stromabwärtigen Ende 16 wenigstens einen - nicht dargestellten - Lufteinlaß zum Zuführen von Frischluft 18 und an seinem stromaufwärtigen Ende 20 wenigstens einen Luftauslaß, der in einen Innenraum eines Fahrzeuges mündet. Das Kanalsystem 14 ist verzweigt ausgeführt und mündet üblicherweise in einer Vielzahl von Luftauslässen, beispielsweise in einer Instrumententafel, im Fußraum, im Türbereich oder dergleichen des Fahrzeuges. Die Frischluft 18 wird entweder als Außenluft, von außerhalb des Fahrzeuges, oder als Innenluft, aus einem Innenraum des Fahrzeuges (Umluftbetrieb), angesaugt. Zum Aufrechterhalten einer Luftströmung ist in das Kanalsystem 14 eine hier nicht dargestellte Strömungsmaschine integriert. Zum wahlweisen Aufheizen der Frischluft 18 wird diese durch das Heizgerät 12 geführt, so daß eine hier lediglich schematisch angedeutete Heizluft 22 dem Innenraum des Fahrzeuges zuführbar ist.

Das Fahrzeug besitzt eine Brennkraftmaschine 24, die flüssigkeitsgekühlt ist. Hierzu ist ein Kühlkreislauf 26 vorgesehen, in den die Brennkraftmaschine 24, ein Kühler 28 sowie eine Fördereinrichtung 30 integriert sind. Ferner ist ein Ausgleichsbehälter 32 vorgesehen, der eine temperaturbedingte Volumenänderung eines, durch den Kühlkreislauf 26 strömenden Kühlmittels, beispielsweise Wasser, ausgleicht.
Der Kühlkreislauf 26 ist mit einem Heizkreislauf 34 gekoppelt. Hierbei führt ein Vorlauf 36 zu einem Wärmetauscher 38, von dem ein Rücklauf 40 zum Kühlkreislauf 26 führt. Durch die Parallelschaltung des Heizkreislaufes 34 zum Kühlkreislauf 26 zirkuliert durch diesen ebenfalls das Kühlmittel mit einer entsprechenden Kühlmitteltemperatur. Der Wärmetauscher 38 ist über eine Temperaturmischklappe 42 mit dem Kanalsystem 14 verbindbar. Die Temperaturmischklappe 42 ist über einen Stellantrieb 44, der beispielsweise von einem Schrittmotor gebildet ist, betätigbar. Über eine hier angedeutete mechanische Verbindung 46 ist der Stellantrieb 44 mit der Temperaturmischklappe 42 gekoppelt.

Im Vorlauf 36 des Heizkreislaufes 34 ist ein Regelventil 48 angeordnet. Das Regelventil 48 ist über ein angedeutetes mechanisches Koppelelement 50, das beispielsweise als Bowdenzug 52 ausgebildet ist, mit dem Stellantrieb 44 verbunden.

Der Heizungsanlage 10 ist ferner ein Heizungssteuergerät 54 zugeordnet, das ein Stellmittel 56 umfaßt, dessen Stellung der Heizleistungsanforderung für den Innenraum des Fahrzeuges entspricht. Das Heizungssteuergerät 54 ist über eine Steuerleitung 58 mit dem Stellantrieb 44 verbunden.

Die in der Figur dargestellte Heizungsanlage 10 zeigt folgende Funktion:

Beim Betrieb der Brennkraftmaschine 24 erfolgt über die Fördereinrichtung 30 eine Umwälzung des Kühlmittels innerhalb des Kühlkreislaufes 26 und - durch die Parallelschaltung - im Heizkreislauf 34. Das Kühlmittel besitzt hierbei eine, gegebenenfalls über eine nicht dargestellte Steuereinrichtung einstellbare Soll-Kühlmitteltemperatur. Durch den Wärmetauscher 38 kann dem Kühlmittel eine Wärmemenge entzogen und diese der Frischluft 18 zugeführt werden. Diese Wärmemenge wird durch eine Öffnungsstellung der Temperaturmischklappe 42 beeinflußt. Entsprechend der Stellung der Temperaturmischklappe 42 wird eine mehr oder weniger große Menge der Frischluft 18 über den Wärmetauscher 38 geführt, so daß eine Ausblastemperatur T_{A} der Heizluft 22 in den Innenraum des Fahrzeuges einstellbar ist. Der Öffnungsgrad der Temperaturmischklappe 42 ist abhängig von einer Heizleistungsanforderung für den Innenraum des Fahrzeuges. Die Heizleistungsanforderung kann durch eine automatische Temperaturregelung für den Innenraum des Fahrzeuges und/oder einen Fahrzeugführer ausgelöst werden. Entsprechend dieser Heizleistungsanforderung wird die Temperaturmischklappe 48 über den Stellantrieb 44 geöffnet beziehungsweise geschlossen, so daß ein freier Strömungsquerschnitt des Kanalsystems 14 derart variiert wird, daß der Anteil der über den Wärmetauscher 38 geführten Frischluft 18 mit höherer Heizleistungsanforderung ansteigt beziehungsweise mit sinkender Heizleistungsanforderung abnimmt. Die Ansteuerung des Stellantriebes 44 erfolgt entsprechend der Stellung des Stellmittels 56 des Heizungssteuergerätes 54. Beträgt die Heizleistungsanforderung 0 %, das heißt eine Heizung des Innenraums des Fahrzeuges nicht gewünscht wird, wird über den Stellantrieb 44 die Temperaturmischklappe 42 vollständig geschlossen, so daß die Frischluft 18 quasi an der Temperaturmischklappe 42 und somit am Wärmetauscher 38 vorbeigeleitet wird. Zusätzlich wird über den Stellantrieb 44 durch den Bowdenzug 52 das Vorlaufregelventil 48 im Heizkreis 34 betätigt, so daß eine Umwälzung des Kühlmittels durch die Fördereinrichtung 30 innerhalb des Heizkreises 34 unterbrochen wird. Die Betätigung des Vorlaufregelventils 48 erfolgt durch den Stellantrieb 44 erst, nachdem die Temperaturmischklappe 42 vollständig geschlossen ist. Hierdurch wird sichergestellt, daß ein Absperren des Heizkreislaufes 34 erst erfolgt, nachdem tatsächlich keine Heizleistungsanforderung für den Innenraum des Fahrzeuges mehr besteht. Durch den geschlossenen Heizkreislauf 34 wird kein Kühlmittel, das die Solltemperatur aufweist, mehr über den Wärmetauscher 38 geführt, so daß diesem keine Wärmeenergie mehr zugeführt wird. Hierdurch wird verhindert, daß eine Abstrahlung einer Wärmeenergie durch die Temperaturmischklappe 42 hindurch an die Frischluft 18 erfolgt. Somit wird quasi eine unnötige Aufheizung der Frischluft 18 vermieden. Hierdurch ergibt sich einerseits eine Komforterhöhung für Fahrzeuginsassen, da beispielsweise eine bessere Kühlung/Lüftung des Fahrzeuginnenraumes erfolgen kann. Ferner wird keine zusätzliche Wärmelast auf ein eventuell vorgesehenes Klimatisierungsgerät übertragen, so daß dieses einen besseren Wirkungsgrad erhält. Ferner wird eine unnötige thermische Belastung von weiteren Komponenten des Fahrzeuges, beispielsweise von Audiogeräten, Bedien- und Anzeigeelementen, die in unmittelbarer Nähe des Kanalsystems 14 angeordnet sind, vermieden. Ferner ist eine unnötige thermische Belastung des Heizgerätes 12 selber vermindert.

Wird eine erneute Heizleistungsanforderung gegeben, wird über das Heizungssteuergerät 54 der Stellantrieb 44 angesteuert. Hierbei wird zunächst durch den Bowdenzug 52 das Vorlaufregelventil 48 geöffnet, so daß das Kühlmittel wieder über den Heizkreislauf 34 zirkulieren kann. Anschließend wird über den Stellantrieb 44 die Temperaturmischklappe 42 entsprechend der Heizleistungsanforderung geöffnet.

Der Stellantrieb 44 kann beispielsweise als Schrittmotor ausgebildet sein, der entsprechend seiner Schrittstellung die Temperaturmischklappe 42 betätigt. Der Schrittmotor ist über die Schließstellung der Temperaturmischklappe 42 hinaus betreibbar. Hierdurch wird sichergestellt, daß erst nach Schließen der Temperaturmischklappe 42 der Vorlauf des Heizkreises 34 geschlossen wird beziehungsweise der Vorlauf des Heizkreises 34 geöffnet wird, bevor die Temperaturmischklappe 42 geöffnet wird. Somit wird erreicht, daß zunächst der Wärmetauscher 38 mit einer Wärmeenergie beaufschlagt wird, so daß die Heizleistung des Wärmetauschers 38 mit Öffnen der Temperaturmischklappe 42 zur Verfügung steht.

## Patentansprüche

1. Heizungsanlage (10) für den Innenraum eines Fahrzeuges, das über eine flüssigkeitsgekühlte Brennkraftmaschine (24) antreibbar ist, wobei ein Kühlkreislauf (26) für die Brennkraftmaschine (24) eine Fördereinrichtung (30) für ein Kühlmittel aufweist, der Kühlkreislauf (26) über eine Abzweigstelle und eine Zuführstelle mit einem Heizkreislauf (34) verbunden ist, um im Heizkreislauf ein Heizgerät (38) angeordnet ist, das in Abhängigkeit einer Heizleistungsanforderung eine Wärmeenergie an einen Luftstrom abgibt, und der Luftstrom über ein Kanalsystem (14) an wenigstens einem Auslaß (20) in den Innenraum des Fahrzeuges geführt wird, wobei ein Anteil des über das Heizgerät (38) geführten Luftstromes durch den Öffnungsgrad einer Temperaturmischklappe (42) bestimmt wird, und der Öffnungsgrad der Temperaturmischklappe (42) über einen Stellantrieb (44) einstellbar ist, der von einem Heizungssteuergerät (54) entsprechend der Heizleistungsanforderung angesteuert wird, wobei
der Stellantrieb (44) für die Temperaturmischklappe (42) zusätzlich ein Vorlaufregelventil (48) des Heizkreislaufes (34) betätigt, **dadurch gekennzeichnet, dass** das Vorlaufregelventil (48) erst betätigbar ist, nachdem die Temperaturmischklappe (42) geschlossen ist.

2. Heizungsanlage nach Anspruch 1,
**dadurch gekennzeichnet, dass**
der Stellantrieb (44) ein Schrittmotor ist, der nach Schließen der Temperaturmischklappe (42) über mindestens ein Schaltstellung hinaus betätigbar ist.

3. Heizungsanlage nach Anspruch 1 oder 2,
**dadurch gekennzeichnet, dass**
der Stellantrieb (44) mit dem Vorlaufregelventil (4) über ein mechanisches Schaltmittel (50) gekoppelt ist.

4. Heizungsanlage nach Anspruch 3,
**dadurch gekennzeichnet, dass**
das Schaltmittel (50) ein Bowdenzug (52) ist.

## Claims

1. Heating installation (10) for the interior of a vehicle which can be driven via a liquid-cooled internal combustion engine (24), a cooling circuit (26) for the internal combustion engine (24) having a conveying device (30) for a coolant, the cooling circuit (26) being connected to a heating circuit (34) via a branch point and a supply point, the heating circuit having arranged in it a heating appliance (38) which discharges heat energy to an air stream as a function of a heating power requirement, and the air stream being routed via a duct system (14) at at least one outlet (20) into the interior of the vehicle, a fraction of the air stream routed via the heating appliance (38) being determined by the degree of opening of a temperature mixing flap (42), and the degree of opening of the temperature mixing flap (42) being capable of being set via an actuating drive (44) which is activated by a heating control unit (54) according to the heating power requirement, the actuating drive (44) for the temperature mixing flap (42) additionally actuating a forward-flow regulating valve (48) of the heating circuit (54), **characterized in that** the forward-flow regulating valve (48) can be actuated only after the temperature mixing flap (42) is closed.

2. Heating installation according to Claim 1, **characterized in that** the actuating drive (44) is a stepping motor which can be actuated through at least one switching position after the closing of the temperature mixing flap (42).

3. Heating installation according to Claim 1 or 2, **characterized in that** the actuating drive (44) is coupled to the forward-flow regulating valve (48) via a mechanical switching means (50).

4. Heating installation according to Claim 3, **characterized in that** the switching means (50) is a Bowden cable (52).

## Revendications

1. Système de chauffage (10) pour l'habitacle d'un véhicule, qui peut être commandé par un moteur à combustion interne (24) refroidi par un liquide, un circuit de refroidissement (26) pour le moteur à combustion interne (24) présentant un dispositif d'alimentation (30) pour un réfrigérant, le circuit de refroidissement (26) étant connecté par le biais d'un point de dérivation et d'un point d'amenée à un circuit de chauffage (34), et un appareil de chauffage (38) étant disposé dans le circuit de chauffage, lequel produit, en fonction d'une exigence de puissance de chauffage, une énergie de chauffage dans un courant d'air, et le courant d'air étant guidé par le biais d'un système de conduits (14) à au moins une sortie (20) dans l'habitacle du véhicule, une proportion du courant d'air guidé par le biais de l'appareil de chauffage (38) étant déterminée par le degré d'ouverture d'un clapet de mélange de température (42), et le degré d'ouverture du clapet de mélange de température (42) pouvant être ajusté par le biais d'une commande de réglage (44), qui est commandée par un appareil de commande de chauffage (54) en fonction de l'exigence de puissance de chauffage, la commande de réglage (44) pour le clapet de mélange de température (42) actionnant en outre une soupape de régulation d'alimentation (48) du circuit de chauffage (34),
**caractérisé en ce que**
la soupape de régulation d'alimentation (48) ne peut être actionnée qu'une fois que le clapet de mélange de température (42) a été fermé.

2. Système de chauffage selon la revendication 1,
**caractérisé en ce que**
la commande de réglage (44) est un moteur pas à pas qui peut être actionné après la fermeture du clapet de mélange de température (42) au-delà d'au moins une position de commutation.

3. Système de chauffage selon la revendication 1 ou 2,
**caractérisé en ce que**
la commande de réglage (44) est accouplée à la soupape de régulation d'alimentation (48) par le biais d'un moyen de commutation mécanique (50).

4. Système de chauffage selon la revendication 3,
**caractérisé en ce que**
le moyen de commutation (50) est un câble Bowden (52).
